# EUROPEAN PATENT APPLICATION

(11) **EP 2 508 243 A1**
(43) Date of publication of application: **10.10.2012**
(21) Application number: 11161330.3
(22) Date of filing: 06.04.2011
(51) Int. Cl.: B01D 53/14, B01D 53/64, H01J 61/82, C10G 31/08, C02F 9/00, C02F 1/20

(54) **Method and apparatus for removing mercury from waste water from hydrocarbon well stream**

(71) Applicant: Shell Internationale Research Maatschappij B.V., 2596 HR The Hague (NL)
(72) Inventor: Broersen, Joseph Maria, 2288 GS Rijswijk (NL); Mooijer-van der Heuvel, Miranda Marielle, 50088 Kuala Lumpur (MY); Pek, Johan Jan Barend, 2288 GS Rijswijk (NL)
(74) Representative: Matthezing, Robert Maarten

(57) **Abstract**

At least a part of the elemental mercury from a waste stream comprising an aqueous stream containing dissolved elemental mercury is removed at least by steam stripping, to produce a treated aqueous stream comprising less elemental mercury than said waste stream and a waste stream comprising at least a portion of the elemental mercury from said waste stream.

## Description

The present invention relates to a method and apparatus for producing a hydrocarbon product stream, a treated waste stream and a contaminated stream comprising elemental mercury, from a hydrocarbon well stream.

Hydrocarbon well streams produced from subterranean earth formations typically contain natural gas and/or crude oils, and an aqueous phase containing water. Such hydrocarbon well streams produced in certain areas of the world may contain mercury in quantities sufficient to render their processing problematical. The mercury is not only present in the natural gas and/or the crude oils, but it may also be present in the produced water in high enough concentrations to preclude discharging the produced water into the environment. Current legislative requirements vary by country and for countries where discharge is possible only levels in the region of tens ppb by weight of elemental mercury in disposal water is allowed.

The problem of the presence of mercury in the produced water may be even more pertinent when a glycol, for instance monoethylene glycol MEG, is added to the produced hydrocarbon well stream as a gas hydrate inhibitor. The presence of for instance glycol is thought to increase the solubility of elemental mercury in the aqueous phase of the hydrocarbon well stream.

Mercury can be removed from aqueous solutions by precipitation with a precipitant, followed by flocculation. US patent application publication No. 2008/0283470, for instance, discloses a method for removing mercury from aqueous streams, including produced water from gas and oil wells. To remove the mercury, a mercury precipitation agent is added to the aqueous stream to react with dissolved ionic mercury compounds present in the stream to form a water-insoluble precipitate of a mercury compound, and the precipitated mercury compounds are separated from the water of the stream by means of gas flotation. In this process, the thus separated water is further passed through a media filter to remove residual particulate material and a filtrate of water with reduced level of mercury. This filtrate is passed over activated carbon to remove residual mercury.

Methods such as described in US patent application publication No. 2008/0283470 and other known methods involving precipitation and flocculation require a relatively large amount of plot space for the associated equipment. In particular in an offshore environment, plot space is scarce and expensive. Hence, the known methods are not very attractive for application in an offshore environment, such as for example on an offshore hydrocarbon fluid production platform, for instance in the form of a floating production storage and offloading structure and/or a floating liquefied natural gas production structure.

In a first aspect, the present invention provides a method of producing a hydrocarbon product stream, a treated waste stream and a contaminated stream comprising elemental mercury from a hydrocarbon well stream, said method comprising the steps of:
- producing a hydrocarbon well stream from a subterranean earth formation, said hydrocarbon well stream comprising at least an aqueous phase containing dissolved elemental mercury and a hydrocarbon phase;
- separating the hydrocarbon well stream into at least one intermediate product stream comprising the hydrocarbon phase, and an intermediate waste stream comprising the aqueous phase;
- further processing the at least one intermediate product stream to produce a hydrocarbon product stream from said at least one intermediate product stream;
- drawing a waste stream portion comprising at least a part of the aqueous phase from the intermediate waste stream;
- removing at least a part of the dissolved elemental mercury from the waste stream portion at least by steam stripping, whereby removing a contaminated stream comprising at least a portion of the elemental mercury from said waste stream portion, and resulting in a treated waste stream comprising at least part of the aqueous phase from the waste stream portion from which the contaminated stream has been removed and comprising a lower concentration of elemental mercury than said waste stream portion.

In another aspect, the present invention provides an apparatus for producing a hydrocarbon product stream, a treated waste stream and a contaminated stream comprising elemental mercury from a hydrocarbon well stream, said apparatus comprising:
- an upstream production conduit for providing a hydrocarbon well stream from a subterranean formation, said hydrocarbon well stream comprising at least an aqueous phase containing dissolved elemental mercury and a hydrocarbon phase;
- an inlet separator fluidly connected to the upstream production conduit to receive the hydrocarbon well stream and separate the hydrocarbon well stream into at least one intermediate product stream comprising the hydrocarbon phase, and an intermediate waste stream comprising the aqueous phase;
- hydrocarbon processing means arranged to receive the at least one intermediate product stream and to further process the at least one intermediate product stream to produce a hydrocarbon product stream from said at least one intermediate product stream;
- a waste stream conduit arranged to receive at least a waste stream portion from the intermediate waste stream, said waste stream portion comprising at least a part of the aqueous phase from the intermediate waste stream;
- a steam stripper on an upstream side thereof fluidly connected to the waste stream conduit and arranged to remove at least a part of the dissolved elemental mercury from the waste stream portion by steam stripping, said steam stripper on a downstream side thereof fluidly connected to a contaminated stream conduit for discharging a contaminated stream comprising at least a portion of the elemental mercury from said waste stream portion, and to a treated waste stream conduit for discharging a treated waste stream comprising at least part of the aqueous phase from the waste stream portion from which the contaminated stream has been removed and comprising a lower concentration of elemental mercury than said waste stream portion.

The present invention will now be further illustrated by way of example, and with reference to the accompanying non-limiting drawings, in which:
Figure 1 schemetically shows an apparatus for producing a hydrocarbon product stream, a treated waste stream and a contaminated stream comprising elemental mercury, from a hydrocarbon well stream embodying the invention;
Figure 2 schematically shows a line-up for removing mercury from an aqueous phase that can be used in the apparatus of Figure 1.

For the purpose of this description, a single reference number will be assigned to a line as well as a stream carried in that line. The same reference numbers refer to similar components, streams or lines.

The present disclosure describes a method and apparatus for producing a hydrocarbon product stream from a hydrocarbon well stream produced from a subterranean earth formation as well as a treated waste stream comprising at least part of the aqueous phase from the hydrocarbon well stream from which dissolved elemental mercury has been removed by steam stripping.

It has been found that by stream stripping the treated waste stream may be sufficiently mercury-depleted to be disposed in the environment. Advantageously, no precipitation or flocculation agents are needed nor the equipment for removing the precipitates and flocculates from the aqueous phase.

The presently disclosed methods and apparatuses are not only useful in an offshore environment where plot space is scarce and expensive, but they may also be usefully applied in an onshore environment. In the context of the present specification, the term "subterranean formation" refers to earth formations that can be located offshore or onshore.

Nevertheless, due to the relatively small plot space required to carry out the invention, it is particularly suited for application on an offshore structure, including applications on a floating gas processing structure such as a floating natural gas liquefaction plant.

The hydrocarbon product stream may be obtained by subjecting at least part of a hydrocarbon phase from the hydrocarbon well stream to further processing of any type or combination of process types.

In one specific example, it may be used in a method of producing a liquefied hydrocarbon stream, comprising the steps of:
- producing a hydrocarbon well stream from a subterranean earth formation, said hydrocarbon well stream comprising at least an aqueous phase containing dissolved elemental mercury and a hydrocarbon phase;
- separating the hydrocarbon well stream into at least one intermediate product stream comprising the hydrocarbon phase, and an intermediate waste stream comprising the aqueous phase;
- further processing the at least one intermediate product stream comprising at least extracting heat from at least a part of the at least one intermediate product stream to produce said hydrocarbon product stream in liquefied form;
- drawing a waste stream portion comprising at least a part of the aqueous phase from the intermediate waste stream;
- removing at least a part of the dissolved elemental mercury from the waste stream portion as herein described.

Instead of, or in addition to, comprising at least extracting heat from at least a part of the at least one intermediate product stream to produce said hydrocarbon product stream in liquefied form, the further processing may include one or more of the group consisting of: dehydration; mercury removal; acid component removal including CO₂ removal and/or H₂S removal and/or respective recovery; extraction and/or recovery of natural gas liquids to produce a leaner natural gas stream to be transformed into said liquefied form; nitrogen removal; helium removal and/or helium recovery.

Various processes and installations are known for each of such further processing steps, and need not be explained herein.

A well known example of a liquefied hydrocarbon stream is a liquefied natural gas stream. A variety of suitable installations and line ups are available in the art for extracting heat from a vaporous hydrocarbon containing feed stream, particularly a natural gas stream, as well as other treatment steps such as those briefly described above for the removal of unwanted contaminants and components from the feed stream, which are often performed in conjunction with producing a liquefied hydrocarbon stream. These installations and line ups need not be further explained herein.

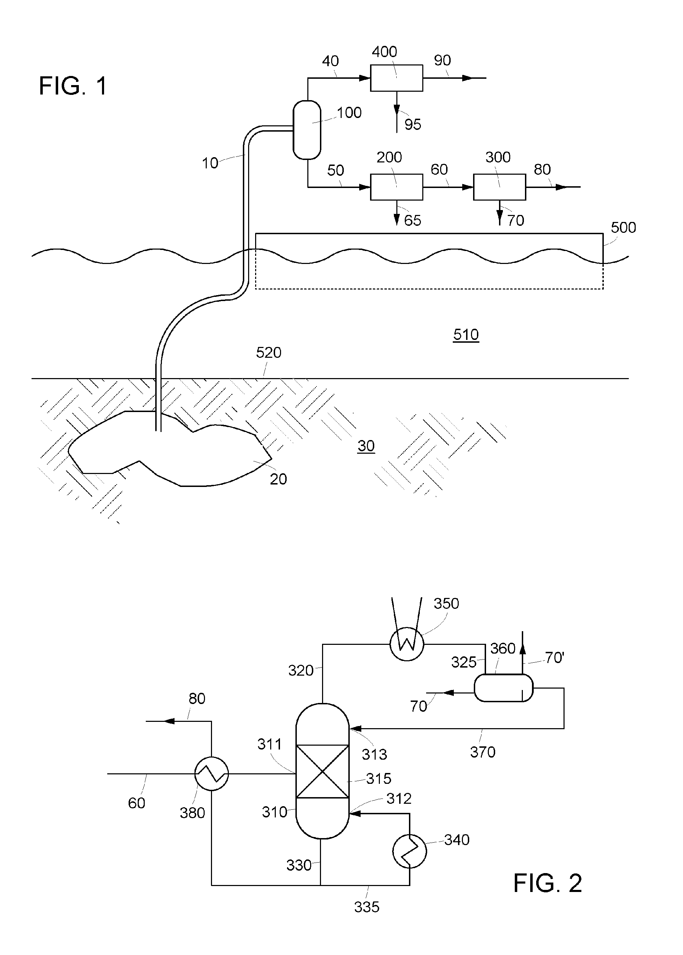

Figure 1 schematically illustrates a method and apparatus for producing a hydrocarbon product stream 90, a treated waste stream 80 and a contaminated stream 70 comprising elemental mercury from a hydrocarbon well stream 10.

The hydrocarbon well stream 10 is provided through an upstream production conduit 10 from a hydrocarbon reservoir 20 in a subterranean formation 30. The hydrocarbon well stream comprises at least an aqueous phase containing water and dissolved elemental mercury and a hydrocarbon phase. A non-hydrocarbon solid phase, such as sand, may also be contained in the hydrocarbon well stream. The aqueous phase may, in addition to dissolved elemental mercury, also contain mercury in other forms, such as ionic, metallic, particulate and organic. The aqueous phase may also contain other minerals and other constituents dissolved therein that originate from the subterranean earth formation, as well as an additive. A common additive is a hydrate inhibitor.

Hydrate inhibitors are chemicals which inhibit the formation of gas hydrates. This inhibition may occur by shifting the gas hydrate forming equilibrium reaction away from hydrate formation at lower temperatures and higher pressures (thermodynamic inhibitors), inhibit the gas hydrate formation reaction so that the time taken for gas hydrates to form is increased (kinetic inhibitors) and/or prevent the agglomeration of any gas hydrates formed (anti-agglomerants).

Examples of thermodynamic inhibitors are alcohols, such as methanol, and or glycols, such as monoethylene glycol (MEG), diethylene glycol (DEG) and triethylene glycol (TEG). Of these, MEG tends to be the most commonly used choice.

Examples of kinetic inhibitors include polymers and copolymers, such as the threshold growth inhibitors disclosed in the Soc. Petroleum engineers, C. Argo, 37255, 1997 and A. Corrigan, 30696, 1997.

Examples of anti-agglomerants include Zwitterionic surfactants, such as ammonium and carboxylic acid group-containing species. Further examples of anti-agglomerants are disclosed in EP 0 526 929 A1 and US Patent No. 6,905,605.

Referring again to Figure 1, the apparatus further comprises an inlet separator 100 fluidly connected to the upstream production conduit 10 to receive the hydrocarbon well stream 10 and separate the hydrocarbon well stream into at least one intermediate product stream 40 comprising the hydrocarbon phase, and an intermediate waste stream 50 comprising the aqueous phase. Optionally, the hydrocarbon well stream 10 may be separated into more streams than described above, e.g. including two intermediate product stream of which one carries a hydrocarbon gas phase and one carries a hydrocarbon liquid phase, and/or including a solids-containing stream.

Hydrocarbon processing means 400 are arranged to receive the at least one intermediate product stream 40 and to further process the at least one intermediate product stream 40 to produce the hydrocarbon product stream 90 from the at least one intermediate product stream 40. In addition to the hydrocarbon product stream 90, the hydrocarbon processing means 400 may produce one or more by-product streams 95. In one example, wherein the hydrocarbon processing means 400 comprises a liquefaction system (not shown), the hydrocarbon product stream 90 may be a liquefied natural gas stream while a natural gas liquids stream (e.g. a liquefied petroleum gas stream for the majority consisting of propane and/or butane) may be one of the one or more by-product streams 95. More generally, the liquefaction system is arranged to extract heat from at least part of the intermediate product stream 40 thereby producing the hydrocarbon product stream in liquefied form, in the form of a liquefied hydrocarbon stream.

A waste stream portion 60 is drawn from the intermediate waste stream 50 and passed into a waste stream conduit 60. The waste stream portion 60 comprises at least a part of the aqueous phase from the intermediate waste stream 50. Suitably, a hydrate inhibitor regeneration unit 200 is provided to draw the waste stream portion 60 from the intermediate waste stream 50. The hydrate inhibitor regeneration unit 200 is at its upstream side connected to the inlet separator 100 via the waste stream conduit 50. A regenerated hydrate inhibitor stream 65, which comprises a higher concentration of the hydrate inhibitor additive than the aqueous phase of the intermediate waste stream 50 removed from the intermediate waste stream 50 is discharged from the hydrate inhibitor regeneration unit 200. At least part of the residue portion of the intermediate waste stream 50, generally a water stream comprising a lower concentration of the hydrate inhibitor additive than the aqueous phase of the intermediate waste stream 50, is discharged as the waste stream portion 60 into the waste stream conduit.

A steam stripper 300 is, on an upstream side thereof, fluidly connected to the waste stream conduit 60 and arranged to remove at least a part of the dissolved elemental mercury from the waste stream portion 60 by steam stripping. On the downstream side thereof, the steam stripper 300 is fluidly connected to a contaminated stream conduit 70 for discharging a contaminated stream 70 comprising at least a portion of the elemental mercury from said waste stream portion 60, and to a treated waste stream conduit 80 for discharging a treated waste stream 80 comprising at least part of the aqueous phase from the waste stream portion 60 from which the contaminated stream 70 has been removed. The treated waste stream 80 contains a lower concentration of elemental mercury than the waste stream portion 60 upstream of the stream stripper 300.

A suitable embodiment of a steam stripper 300 for removing dissolved elemental mercury from the produced water will now be illustrated with reference to Figure 2. The embodiment comprises a separation tank 310 fluidly connected to the waste stream conduit 60 via a first inlet 311. An overhead vapour conduit 320 is connected to the contaminated stream conduit 70. A bottom liquid stream conduit 330 is connected to the treated waste stream conduit 80.

A steam generator is arranged to provide steam in the separation tank. A variety of embodiments is possible. The steam generator may comprise a pressure reduction device (not shown in the figures) to reduce the pressure in the waste stream portion 60. In addition to such pressure reduction device or instead thereof, the steam generator may comprise a heater. Such heater may for instance be provided internally to the separation tank 310, or it may be provided in the waste stream portion conduit 60 as a feed boiler, or in the form of an external reboiler 340 as shown in Figure 2. These embodiments have in common that each transforms or contributes to transform at least a part of the water present in the waste stream portion 60 into steam. No external water or steam source is then necessary.

The embodiment illustrated in Figure 2 further comprises an optional heat recovery heat exchanger 380 in the waste stream conduit 60. The waste stream conduit 60 is connected to the cold side of the optional heat recovery heat exchanger 380, the treated waste stream conduit 80 to the warm side of the optional heat recovery heat exchanger 380. At least a part of the heat vested in the treated waste stream 80 can thus be used to preheat the waste stream 60 prior to feeding it into the separation tank 310. Suitable types of heat exchangers for this purpose include tube in shell type heat exchangers or pipe in pipe heat exchangers, but preferred is a plate-type heat exchanger, for example a plate-fin heat exchanger and/or a printed circuit heat exchanger, optionally in a cold box.

Suitable embodiments further comprise an overhead condenser 350 in fluid communication with the separation tank 310 via the overhead vapour conduit 320. The overhead condenser 350 is arranged to form an overhead condensed phase 325, by at least partly condensing an overhead vapour stream withdrawn from the separation tank 310. The overhead condenser 350 may be provided in the form of an overhead heat exchanger. Suitable types of heat exchangers for this purpose include tube in shell type heat exchangers or pipe in pipe heat exchangers, but preferred is a plate-type heat exchanger, for example a plate-fin heat exchanger and/or a printed circuit heat exchanger, optionally in a cold box.

An overhead separator 360 is fluidly connected to the overhead condenser 350, and arranged to receive the overhead condensed phase 325. The overhead separator 360 may be connected to the contaminated stream conduit 70 for discharging the contaminated stream.

A residue stream conduit 370 is fluidly connected to the overhead separator 360, for discharging a water-containing residue stream 370 from the overhead separator 360. This residue stream conduit 370 is separate from the contaminated stream conduit 70. The residue stream conduit 370 is optionally fluidly connected with the separation tank 310 suitably via a third inlet 313 of the separation tank 310, that is located gravitationally higher than the first inlet 311.

The separation tank 310 may be provided with suitable internals, including a vapour/liquid contacting means 315 in the form of one or more contacting trays and/or a packing. Such vapour/liquid contacting means would preferably be located gravitationally below the optional third inlet 313 for reflux and gravitationally above the optional second inlet 312. Other suitable internals may include inlet devices for reflux or steam (not shown), mist mats (not shown) as well known to the person skilled in the art.

In the embodiment of Figure 1, the inlet separator 100, the hydrate inhibitor regeneration unit 200, the steam stripper 300, and the hydrocarbon processing means 400 are all located in and/or on an offshore structure. The offshore structure may be a floating offshore structure 500 that floats on a body of water 510 such as the sea. The floating offshore structure 500 may be weathervaningly connected to an anchored turret (not shown), whereby the upstream production conduit 10 suitably enters the floating offshore structure 500 via the turret. The hydrocarbon reservoir 20 in the embodiment of Figure 1 is a subterranean formation 30 below the sea bed 520.

During operation, the apparatus described above works as follows.

The hydrocarbon well stream 10 is produced from the hydrocarbon reservoir 20 from the subterranean earth formation 30. The hydrocarbon well stream 10 is separated into the at least one intermediate product stream 40 comprising the hydrocarbon phase, and the intermediate waste stream 50 comprising the aqueous phase. The at least one intermediate product stream 40 is further processed to produce the hydrocarbon product stream 90.

At the same time, simultaneously therewith, a waste stream portion 60 is drawn from the intermediate waste stream 50, which a waste stream portion 60 comprises at least a part of the aqueous phase from the intermediate waste stream 50. In specific embodiments, wherein the aqueous phase of said intermediate waste stream comprises water and a hydrate inhibitor additive, the drawing of the waste stream portion 60 from the intermediate waste stream 50 may comprise separating the aqueous phase of the intermediate waste stream 50 into the regenerated hydrate inhibitor stream 65 having a higher concentration of the hydrate inhibitor additive than the aqueous phase of the intermediate waste stream 50, and a water stream having a lower concentration of the hydrate inhibitor additive than the aqueous phase of the intermediate waste stream 50. At least part of the water stream may be discharged into the waste stream conduit 60 as the waste stream portion 60.

The waste stream portion may contain more than 40 ppb by weight, in some cases even more than 60 ppb by weight, of elemental mercury, typically dissolved in it.

At least a part of the dissolved elemental mercury is removed from the waste stream portion at least by steam stripping. During the steam stripping, a contaminated stream 70 is removed, which has at least a portion of the elemental mercury from the waste stream portion 60. This results in a treated waste stream 80 containing at least part of the aqueous phase from the waste stream portion 60, from which the contaminated stream 70 has been removed. The treated waste stream 80 comprises a lower concentration of elemental mercury than said waste stream portion 60.

In specific embodiments of the steam stripping, the waste stream portion 60 is fed into the separation tank 310 via the first inlet 311. Steam is provided in the separation tank 310 via the third inlet 312, and an overhead vapour stream 320 is discharged from the separation tank 310. The overhead vapour stream 320 comprises the constituents that will end up in the contaminated stream 70, supplemented with at least part of the steam. A liquid bottom stream 330 is discharged from the separation tank 310. The liquid bottom stream 330 contains the reboil portion 335 and the treated waste stream 80.

The pressure in the separation tank is preferably in a range of from 1.2 bara to 10 bara, more preferably in a range of from 1.2 bara to 5 bara, most preferably in a range of from 1.2 bara to 2.7 bara. In one example, which will be discussed in more detail below, the pressure in the separation tank was 2.0 bara.

The temperature of the liquid bottom stream 330 may be between 110 and 180 °C, preferably between 110 and 150 °C if the pressure is in said range of from 1.2 bara to 5 bara, preferably between 110 and 130 °C if the pressure is in said range of from 1.2 bara to 2.7 bara.

The temperature of the overhead vapour stream 320 should preferably be lower than the temperature of the liquid bottom stream 330. In more preferred embodiments the temperature of the overhead vapour stream 320 is be between zero and 20 °C lower than the temperature of the liquid bottom stream 330.

Steam may be added to the separation tank 310 from any source, including a separate steam source. However, it is preferred to provide steam using the water that is already present in the waste stream portion 60.

This may be supported by subjecting the waste stream portion to a depressurization step prior to or during said feeding into the separation tank 60. A pressure drop of 1.0 bar or more may suffice or help to reduce the required temperature. The pressure drop may for instance be between 1.0 bar and 5.0 bar.

Most of the steam may however be generated by heating at least a part of the waste stream portion 60 to thereby form the steam from the aqueous phase in the waste stream portion itself. Heat can be added to the waste stream portion 60 before it is fed to the separation tank 310, for instance by allowing the waste stream portion to pass through a heat exchanger. A heat recovery heat exchanger 380 is shown in the embodiment of Figure 2 as an example. The external reboiler 340 of the embodiment of Figure 2 receives a reboil portion 335 from the bottom liquid stream conduit 330. After adding heat to the reboil portion 335, it is reinjected in the form of steam into the separation tank 310 in a lower portion thereof, preferably via a second inlet 312 that is gravitiationally lower than the first inlet 311. The remainder of the bottom liquid stream 330 in bottom liquid stream conduit 330 is fed to the treated waste stream conduit 80. The heat may be added in the form of steam in a separate steam circuit. The separate steam circuit is not is not fluidly connected with line 335 such that there is no intermixing with the fluids in the reboil portion 335.

The amount of elemental mercury in the treated waste stream 80 is preferably at most 40 ppb by weight, more preferably at most 10 ppb by weight, most preferably less than 0.1 ppb by weight.

The overhead vapour stream 320 is at least partially, or fully, condensed (in overhead condenser 350) to form an overhead condensed phase 325, which is fed to the overhead separator 360. During condensation heat may be extracted by cooling against a stream drawn from the ambient, such as an ambient air stream, or preferably a water stream drawn from the body of water 510 if the method is carried out off shore or close to shore, and/or the apparatus is located off shore or close to shore. The contaminated stream 70 is removed from the overhead separator 360, as well as the residue stream 370, containing water. The residue stream is separate from the contaminated stream 70 and contains less mercury than the contaminated stream 70. The contaminated stream 70 may be drawn from the overhead separator 360 in liquid form, which may essentially consist of or consist of liquid elemental mercury. Alternatively, the contaminated stream may be drawn from the overhead separator 360 in the vapour form. This alternative option is indicated in Figure 2 by means of a contaminated vapour stream outlet line 70'. Such contaminated vapour stream 70' typically contains other vapours besides mercury vapour as well.

The contaminated vapour stream 70' may be passed through a mercury absorption unit known in the art in order to remove mercury from the contaminated vapour stream 70'. Once mercury has been removed, the contaminated vapour stream 70' may be disposed of. Particularly in cases where the hydrocarbon processing in hydrocarbon processing means 400 contains a mercury removal step, for instance using a mercury absorption unit, the contaminated vapour stream 70' may be injected into the at least one intermediate product stream 40 to be processed together with this intermediate product stream 40. Suitably, this may be done via the inlet separator 100. This way, the a mercury removal step of said hydrocarbon processing in said hydrocarbon processing means 400 is advantageously used to remove mercury from both vapour streams.

Suitably, the residue stream 370 or at least part thereof is led back into the separation tank 310 as a reflux stream is fed to the separation tank 310.

Thermodynamic modeling has been applied to explore the proposed application of steam stripping for reducing the concentration of elemental mercury that is dissolved in produced water produced from a subterranean well. The modeling is based on lower solubility of elemental mercury in pure water at lower temperatures. Hence, cooling down the overhead vapour stream containing water and mercury may result in formation of a separate liquid phase of mercury.

The following examples explore the effect of steam stripping applied in a situation wherein the aqueous phase of the hydrocarbon well stream 10 contains MEG as hydrate inhibitor, and the waste stream portion 60 is drawn from a MEG regenerator 200. The stream numbers in the tables presented below correspond to reference numbers used in Figure 2. The tables list calculated values for elemental mercury, identified as Hg(O), which in stream 70 is in liquid form.

The temperature and pressure conditions shown for the treated waste stream 80 reflect the conditions upstream of any heat recovery heat exchanger 380 should this be provided, while the temperature and pressure conditions shown for the waste stream portion 60 correspond to those downstream of any such heat recovery heat exchanger 380 (and upstream of the separation tank 310).

### Example 1

The first example considers a case wherein the waste stream portion 60 consists of only water, MEG and about 100 ppb of elemental mercury, and is produced at a flow rate of 69870 kg/hr from the MEG regeneration unit 200.

The pressure and temperature of various streams are presented in Table 1, the calculated stream compositions are presented in Table 2, and calculated flow rates in Table 3.

**TABLE 1**

| **Stream** | **60** | **320** | **80** | **70** | **70'** | **370** |
|---|---|---|---|---|---|---|
| Temp (°C) | 60 | 120 | 129 | 30 | 30 | 30 |
| Pressure (bara) | 2 | 2 | 2 | 2 | 2 | 2 |

**TABLE 2: Concentration in mole%.**

| **Stream** | **60** | **320** | **80** | **70** | **70'** | **370** |
|---|---|---|---|---|---|---|
| H₂O | 75.3 | 100 | 75.3 | 0.00 | 100 | 100 |
| Hg(0) | 1.4E-6 | 2.6E-6 | 8E-22 | 100 | 8.8E-3 | 6.1E-7 |
| MEG | 24.7 | 0.00 | 24.7 | 0.00 | 0.00 | 0.00 |

**TABLE 3: Flow rates in kg/hr.**

| **Stream** | **60** | **320** | **80** | **70** | **70'** | **370** |
|---|---|---|---|---|---|---|
| H₂O | 32839 | 31124 | 32836 | 0.00 | 0.00 | 31124 |
| Hg(0) | 7.0E-3 | 9.1E-3 | 4E-18 | 7.0E-3 | <1E-99 | 2.11E-3 |
| MEG | 37031 | 12 | 37031 | 0.00 | 0.00 | 12 |

The Hg(0) partitions to the overhead vapour stream 320 of the steam stripper. Practically all is condensed in the overhead condenser 350 and forms liquid Hg(0). This liquid Hg(0) partly remains in the residue stream 370 and partly recycles to the separation tank 310 in the reflux. The produced water stream from the bottom of the separation tank 310 in the form of the treated waste stream 80 contains negligible amounts and concentrations of Hg(0).

### Example 2

The first example considers a case wherein the waste stream portion 60 produced from the MEG regeneration unit 200 contains contaminants of hydrocarbons (HCs) and carbon dioxide (CO₂) in addition to the water, MEG and approximately 1100 ppb of elemental mercury.

The pressure and temperature of various streams are presented in Table 4, the calculated stream compositions are presented in Table 5, and calculated flow rates in Table 6. The calculations are less reliable than in the case of Example 1, presumably because the interaction parameters between mercury and CO₂ are not well established.

This example uses depressurization step for the waste stream portion 60 between the MEG regeneration unit 200 and the separation tank 310, in this case achieving a pressure drop of 2 bar.

**TABLE 4**

| **Stream** | **60** | **320** | **80** | **70** | **70'** | **370** |
|---|---|---|---|---|---|---|
| Temp (°C) | 60 | 120 | 120 | 30 | 30 | 30 |
| Pressure (bara) | 4 | 2 | 2 | 2 | 2 | 2 |

**TABLE 5: Concentration in mole%.**

| **Stream** | **60** | **320** | **80** | **70** | **70'** | **370** |
|---|---|---|---|---|---|---|
| H₂O | 99.9 | 99.9 | 99.9 | 99.9 | 2.2 | 99.9 |
| Hg(0) | 1.0E-5 | 1.0E-4 | 3E-19 | 9.2E-5 | 2.9E-2 | 9.2E-5 |
| MEG | 0.1 | 0.00 | 0.1 | 0.00 | 0.00 | 0.00 |
| HCs | 2.4E-4 | 5.2E-4 | 2E-19 | 1.6E-4 | 1.0 | 1.6E-4 |
| CO₂ | 2.8E-2 | 0.112 | 4E-15 | 7.7E-2 | 96.8 | 7.7E-2 |

**TABLE 6: Flow rates in kg/hr.**

| **Stream** | **60** | **320** | **80** | **70** | **70'** | **370** |
|---|---|---|---|---|---|---|
| H₂O | 75390 | 57063 | 75388 | 0.00 | 0.00 | 57063 |
| Hg(0) | 8.6E-2 | 0.652 | 2E-15 | <1E-99 | 6.9E-2 | 0.584 |
| MEG | 302 | 6 | 302 | 0.00 | 0.00 | 6 |
| HCs | 0.299 | 0.534 | 1E-15 | <1E-99 | .0352 | 0.182 |
| CO₂ | 51 | 157 | 8E-12 | <1E-99 | 50 | 107 |

In this example the temperature difference between overhead vapour stream 320 of the steam stripper and treated waste stream 80 is very small due to the fact that the waste stream portion 60 consists of 99.9 pure water and thus thermodynamically is close to a single phase. Notwithstanding, the data suggest that the presence of HC and CO₂ components in the waste stream portion 60, even at very low amounts, does result in Hg(0) behaving more volatile than in the case of Example 1. It is speculated that CO₂ appears to be a good solvent for Hg(0) and consequently the Hg(0) reports to the a contaminated vapour stream 70' and the residue stream 370 rather than forming a liquid Hg(0) phase in the contaminated liquid stream 70.

It has been investigated that a further reduction in the temperature of the condensed stream 325 by the overhead condenser 350 does not lead to formation of Hg(0) in liquid form.

This ends example 2. Both examples show that the treated waste stream 80 is practically free from elemental mercury Hg(0) - according to the calculations < 1E-10 ppb by weight which is much less than ppb by weight level.

The person skilled in the art will understand that the present invention can be carried out in many various ways without departing from the scope of the appended claims.

## Claims

1. A method of producing a hydrocarbon product stream, a treated waste stream and a contaminated stream comprising elemental mercury from a hydrocarbon well stream, said method comprising the steps of:
- producing a hydrocarbon well stream from a subterranean earth formation, said hydrocarbon well stream comprising at least an aqueous phase containing dissolved elemental mercury and a hydrocarbon phase;
- separating the hydrocarbon well stream into at least one intermediate product stream comprising the hydrocarbon phase, and an intermediate waste stream comprising the aqueous phase;
- further processing the at least one intermediate product stream to produce a hydrocarbon product stream from said at least one intermediate product stream;
- drawing a waste stream portion comprising at least a part of the aqueous phase from the intermediate waste stream;
- removing at least a part of the dissolved elemental mercury from the waste stream portion at least by steam stripping, whereby removing a contaminated stream comprising at least a portion of the elemental mercury from said waste stream portion, and resulting in a treated waste stream comprising at least part of the aqueous phase from the waste stream portion from which the contaminated stream has been removed and comprising a lower concentration of elemental mercury than said waste stream portion.

2. The method of claim 1, wherein said steam stripping comprises:
- feeding the waste stream portion into a separation tank;
- providing steam in the separation tank;
- discharging an overhead vapour stream from the separation tank which overhead vapour stream comprises said contaminated stream supplemented with at least part of the steam;
- discharging the treated waste stream from the separation tank in the form a liquid stream.

3. The method of claim 2, wherein the pressure in the separation tank is in a range of from 1.2 bara to 10 bara.

4. The method of claim 2 or 3, wherein said providing of steam in the separation tank comprises subjecting the waste stream portion to a depressurization step prior to or during said feeding into the separation tank.

5. The method of claim 2 or 4, wherein said providing of steam in the separation tank comprises heating at least a part of the waste stream portion.

6. The method of any one of claims 2 to 5, further comprising:
- at least partially condensing the overhead vapour stream to form an overhead condensed phase;
- feeding the overhead condensed phase to an overhead separator;
- removing the contaminated stream from the overhead separator;
- drawing a residue stream, containing water, from the overhead separator which residue stream is separate from the contaminated stream and contains less mercury than the contaminated stream; and optionally further comprising:
- feeding at least a part of the residue stream to the separation tank as a reflux stream.

7. The method of claim 6, wherein the contaminated stream essentially consists of, preferably consists of, liquid elemental mercury.

8. The method of claim 6, wherein the contaminated stream is removed from the overhead separator in vapourous form and passed through a mercury removal step.

9. The method of any one of the preceding claims, wherein the aqueous phase of said intermediate waste stream comprises water and a hydrate inhibitor additive, wherein said drawing of said waste stream portion from the intermediate waste stream comprises separating said aqueous phase of said intermediate waste stream into a regenerated hydrate inhibitor stream comprising a higher concentration of said hydrate inhibitor additive than the aqueous phase of the intermediate waste stream, and a water stream comprising a lower concentration of the hydrate inhibitor additive than the aqueous phase of the intermediate waste stream, and discharging at least part of the water stream as the waste stream portion.

10. The method of claim 9, wherein the hydrate inhibitor additive is a glycol.

11. The method of any one of the preceding claims, wherein said further processing comprising at least extracting heat from at least a part of the intermediate product stream to produce said hydrocarbon product stream in liquefied form.

12. An apparatus for producing a hydrocarbon product stream, a treated waste stream and a contaminated stream comprising elemental mercury from a hydrocarbon well stream, said apparatus comprising:
- an upstream production conduit for providing a hydrocarbon well stream from a subterranean formation, said hydrocarbon well stream comprising at least an aqueous phase containing dissolved elemental mercury and a hydrocarbon phase;
- an inlet separator fluidly connected to the upstream production conduit to receive the hydrocarbon well stream and separate the hydrocarbon well stream into at least one intermediate product stream comprising the hydrocarbon phase, and an intermediate waste stream comprising the aqueous phase;
- hydrocarbon processing means arranged to receive the at least one intermediate product stream and to further process the at least one intermediate product stream to produce a hydrocarbon product stream from said at least one intermediate product stream;
- a waste stream conduit arranged to receive at least a waste stream portion from the intermediate waste stream, said waste stream portion comprising at least a part of the aqueous phase from the intermediate waste stream;
- a steam stripper on an upstream side thereof fluidly connected to the waste stream conduit and arranged to remove at least a part of the dissolved elemental mercury from the waste stream portion by steam stripping, said steam stripper on a downstream side thereof fluidly connected to a contaminated stream conduit for discharging a contaminated stream comprising at least a portion of the elemental mercury from said waste stream portion, and to a treated waste stream conduit for discharging a treated waste stream comprising at least part of the aqueous phase from the waste stream portion from which the contaminated stream has been removed and comprising a lower concentration of elemental mercury than said waste stream portion.

13. The apparatus of claim 12, wherein said steam stripper comprises:
- a separation tank fluidly connected to the waste stream conduit, an overhead vapour conduit connected to the contaminated stream conduit, and a bottom liquid stream conduit connected to the treated waste stream conduit;
- a steam generator arranged to provide steam in the separation tank.

14. The apparatus of claim 13, further comprising:
- an overhead condenser in fluid communication with the separation tank via the overhead vapour conduit and arranged to form an overhead condensed phase by at least partly condensing an overhead vapour stream withdrawn from the separation tank;
- an overhead separator fluidly connected to the overhead condenser and arranged to receive the overhead condensed phase, said overhead separator being connected to the contaminated stream conduit for discharging the contaminated stream;
- a residue stream conduit fluidly connected to the overhead separator for discharging a water-containing residue stream from the overhead separator, which residue stream conduit is separate from the contaminated stream conduit, wherein said residue stream conduit is optionally fluidly connected with the separation tank to feed at least a part of the residue stream to the separation tank as a reflux stream.

15. The apparatus method of any one of claims 12 to 14, further comprising a hydrate inhibitor regeneration unit connected to the inlet separator and the waste stream conduit, and arranged to draw the waste stream portion from the intermediate waste stream in the form of a water stream comprising a lower concentration of a hydrate inhibitor additive than the aqueous phase of the intermediate waste stream.

16. The apparatus of any one of claims 12 to 15, wherein said hydrocarbon processing means comprises a liquefaction system arranged to extract heat from at least part of the intermediate product stream thereby producing said hydrocarbon product stream in liquefied form.
